Europäisches Patentamt

European Patent Office

Office européen des brevets

(19)

(11) Publication number: **0 107 459**
A1

# EUROPEAN PATENT APPLICATION

(12)

(21) Application number: 83306248.2

(22) Date of filing: **14.10.83**

(51) Int. Cl.³: **F 17 D 1/20,** F 16 K 7/07,
F 16 L 55/04

(30) Priority: **27.10.82 US 437182**

(71) Applicant: **GROVE VALVE AND REGULATOR
COMPANY, 6529 Hollis Street, Oakland
California 94608 (US)**

(43) Date of publication of application: **02.05.84
Bulletin 84/18**

(72) Inventor: **Chow, Peter C. M., 35254, Lake Blvd., Newark
California 94560 (US)**
Inventor: **Edward, John D., 718 Charlton Drive, Pleasant
Hill California 94523 (US)**

(74) Representative: **Williams, Trevor John et al, J.A. KEMP &
CO. 14 South Square Gray's Inn, London WC1R 5EU (GB)**

(84) Designated Contracting States: **DE FR GB IT NL**

(54) **Pump control-surge reliever system.**

(57) A surge control system for a liquid-transporting pipeline including a pump. A two-way surge reliever valve, preferably of the expansible tube type, is located in a by-pass line around the pump and the jacket or control pressure is maintained at the level of an accumulator connected to the pipeline downstream of the pump. The inlet line to the accumulator has a restriction so that when the pump starts, pressure build-up in the accumulator and control jacket is retarded, allowing by-pass flow from the downstream side of the pump back to the upstream side. The discharge from the accumulator is full capacity with a one-way check valve so that when the pump is stopped, liquid is drawn from the accumulator first to alleviate column separation in the downstream pipeline and then to draw down the jacket pressure to allow by-pass flow around the pump to further alleviate column separation.

# PUMP CONTROL-SURGE RELIEVER SYSTEM

## BACKGROUND OF THE INVENTION

Hydraulic pressure surges are commonly encountered in liquid pipelines when the flow velocity is changed suddenly, as when a blocking valve is closed, or a pump is started up or shut down. Such pressure surges can be either positive or negative in magnitude, depending on the location in the pipeline. Conventional surge relief valves or systems are adapted to protect the pipeline against positive pressure surges only, by diverting a portion of the flowing liquid from the pipeline into a low pressure zone, such as a reservoir or holding tank. Systems of this type are shown in the following United States patents:

| | | |
|---|---|---|
| Patent No. 3,911,941 | October 14, 1975 | Gerbic, et al. |
| Patent No. 3,972,364 | August 3, 1976 | Brumm |
| Patent No. 3,933,172 | January 20, 1976 | Allen |
| Patent No. 4,261,387 | April 14, 1981 | Cohn |
| Patent No. 4,282,757 | August 11, 1981 | Cohn |
| Patent No. 4,340,079 | July 20, 1982 | Smith, et al. |

Negative pressure surges are generally alleviated by injecting air into the pipeline; by using a vacuum breaker to relieve a vacuum within the pipeline; or by injecting liquid into the piepline from a pressurized vessel, such as an accumulator. A complete surge relief system would require one or more of the aforementioned devices or systems at both the upstream and downstream sides of the equipment that produces the change in flow velocity. However, this would be very costly and would require considerable space to accommodate the equipment.

## OBJECTS OF THE INVENTION

It is an object of this invention to provide a surge control system that protects against both and negative pressure surges.

It is a further object of this invention to provide a surge relief system that functions also as a pump control means.

It is a further object of this invention to provide a surge relief system that protects both the suction and discharge sides of a pump.

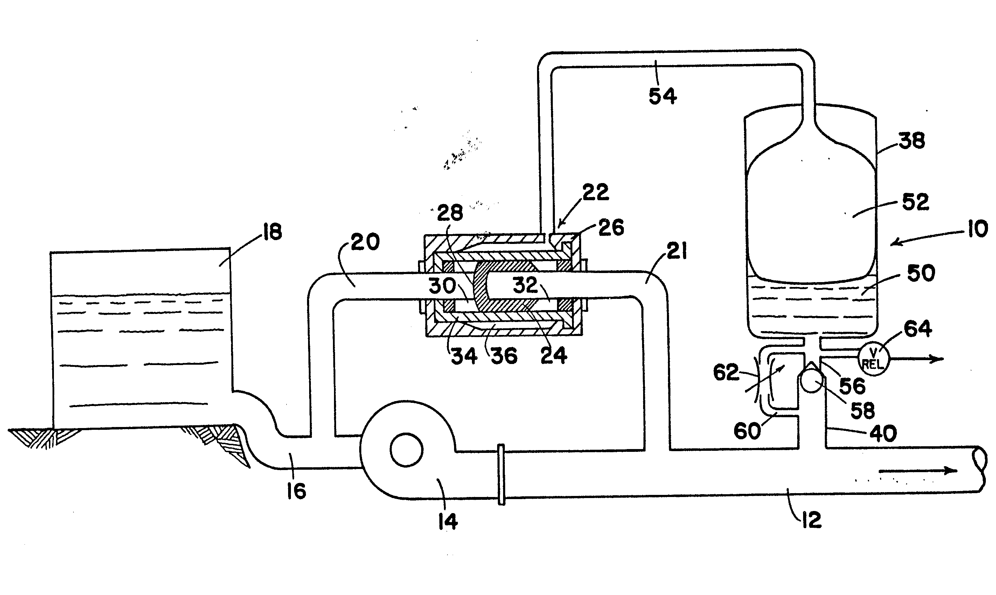

Other objects and advantages of this invention will become apparent from the description to follow, particularly when read in conjunction with the accompanying drawing.

## SUMMARY OF THE INVENTION

A by-pass line is provided around a pump in the pipeline, and installed in the by-pass line is a control valve, preferably of the expansible sleeve type wherein a flexible tube is stretched over a barrier across the flow passage to open when pressure in the flow passage exceeds a surrounding pneumatic jacket pressure. The jacket is normally at pump discharge pressure through an accumulator, which is connected from the pipeline downstream of the pump. Hence, in normal operation, both the jacket and the by-pass line are at pump discharge pressure and there is no by-pass flow. One line from the accumulator to the pipeline is of large capacity and has a one-way check valve enabling discharge flow only. A load line connected from the pipeline to the accumulator has a metering valve so that flow to the accumulator is retarded. Hence, at pump start-up, pressure in the by-pass line increases rapidly, while that in the control valve jacket is retarded by the metering valve. This allows by-pass flow from the discharge of the pump back to the suction side, both to relieve a positive pressure surge and to accommodate the pump discharge until same can be accommodated in the pipeline itself. On pump shut-down, the liquid is drawn rapidly from the accumulator to fill the void of the liquid column separation and if the void is not satisfied, the low pressure in the pipeline will continue to draw down the jacket pressure until the control valve is opened for by-pass flow from the suction side of the pump. This by-pass flow is further beneficial in that it relieves the positive pressure surge that occurs on the suction side of the pump as a result of pump shut-down.

## BRIEF DESCRIPTION OF THE DRAWING

The drawing is a schematic illustration of the surge relieving pump control valve system of this invention installed in a pipeline.

## DESCRIPTION OF A PREFERRED EMBODIMENT

The surge relieving-pump control system 10 of this invention is adapted for installation in a pipeline 12 including a pump 14 to which liquid is delivered from the incoming pipeline 16 at some pressure, such as from the liquid head of a storage tank 18 or from a pump (not shown) further upstream. Tapped into the pipeline from the suction side 16 of the pump 14 to the discharge side 12 is a by-pass line 20, 21 in which is installed the control valve 22, which is preferably of the expansible tube type.

In the control valve 22, a slotted sleeve 24 is positioned within a housing 26 and has a central circular barrier 28 and upstream and downstream flow slots 30 and 32. A resilient sleeve 34 is stretched over the central barrier 28 to form a seal therearound, and a jacket or control chamber 36 contains a control pressure fluid which prevents flow through the valve 22 unless and until the pressure in the by-pass line in either direction 20 or 21 overcomes the pressure in the jacket 36 by enough to expand the resilient sleeve 34 away from sealing engagement with the central barrier 28. Valves of this type are typified by that shown in U.S. Patent No. 3,272,470 granted September 13, 1966 to A. U. Bryant. The pressure in control jacket 36 is determined by pressure in an accumulator 38 which is connected to the pipeline at 40 downstream of the pump 14. The accumulator 36 preferably has a liquid-gas separator, such as the bladder shown, wherein the pressure of the liquid 50 is transmitted to a gas 52 which, in turn, is connected to the control valve jacket 36 by means of a transfer duct 54.

The pipeline-accumulator communicating conduit means 40 includes a large capacity discharge pipe 56 having a one-way check valve 58 that

0107459

enables flow only from the accumulator 38 to the pipeline 12. Also connected to the accumulator is a load line 60 which includes a variable metering valve 62 so that flow from pipeline 12 to the accumulator 38 is retarded to the extent determined by the setting of the metering valve 62. Finally, a small relief valve 64 is provided at the liquid connection to the accumulator 56 for a purpose hereinafter to be described.

## Operation

Prior to pump start-up, the accumulator 38 is nearly empty and it, as well as the control valve jacket 36 are at pipeline pressure. Then, as the pump starts, the liquid column in the pipeline begins to accelerate and flow through the accumulator connector line 40 commences. The check valve 58 closes, and flow is restricted to the metering valve 62 while flow at the by-pass line 21 downstream of the pump 14 reaches pump discharge pressure very quickly. Initially, therefore, the pressure in the jacket 36 is less than that in the discharge side by-pass line 21 and the control valve 22 opens to recirculate liquid back through line 20 to the suction side 16 of the pump 14. Then, as the accumulator continues to fill slowly, the pressure in the jacket 36 also continues to increase to reduce the differential pressure between the by-pass line 21 and the jacket 36 so that flow through the control valve 22 is throttled, reducing the recirculating flow to the suction side of the pump 14 as pipeline flow accelerates. Finally, when jacket pressure reaches pump discharge pressure, there is no by-pass recirculation.

Hence the by-pass line 21 functions not only to relieve a pressure surge in the pipeline 12 but functions as a pump control valve to recirculate fluid in a constant delivery pump which may, on start-up, exceed the capacity of the pipeline to handle it.

When the pump is inactivated, it winds down quickly and the momentum of the liquid column in the downstream pipeline tends to cause column separation at the pump discharge side, which would leave a vacuum behind the column. The creation of a vacuum is dangerous in that it subjects the pipeline to collapsing from external forces and in addition leaves a void for a positive surge return of the liquid column. As the pump discharge pressure falls, the air pressure in the accumulator gas side 52 and the control jacket 36 forces the liquid out of the accumulator 38 quickly through its large discharge line 56 and check valve 58 in an effort to avoid liquid column separation.

If the liquid from the accumulator 38 alone fails to fill the void of liquid column separation, the low pipeline pressure continues to draw down the pressure in the accumulator 38 and the control valve jacket 36, so that the pressure in the jacket 36 is less than that in the by-pass line 20, same having been built up by positive pressure surge at the suction side of the pump 14 upon stoppage thereof. When this differential pressure becomes sufficient to overcome the tube tension of the expansible tube 34, the control valve 22 opens to by-pass liquid from the suction side 16 and around the stopped pump 14, both to relieve the positive surge at the suction side of the pump and to alleviate the negative surge and column separation at the discharge side. As long as the liquid momentum is sufficient to cause liquid separation, the pressure in the jacket 36 should be at or below atmospheric pressure and the static pressure should be sufficient to overcome the tube tension and keep the control valve open for by-pass flow around the pump.

When the liquid flow finally slows to a condition such that the differential pressure between the by-pass line 20 and the control jacket 36 is no longer sufficient to overcome the tube tension, the control valve 22 will close.

Finally, in the event that the control valve 22 does not provide sufficient by-pass flow to prevent liquid separation in the downstream line 12, the very low pressure in the jacket 36 will allow the control valve 22 to open in the event of a subsequent positive surge caused from liquid rejoining, i.e. surging back to fill the void, and to relieve the positive surge by enabling by-pass flow through lines 21 and 20 back into the suction side 16 of the pump.

Referring now to the small relief valve 64 mentioned above, this may be set at a pressure just below the no-flow head of the pump to limit the pressure in the accumulator 38 and, therefore, the control valve jacket 36. As a result, if there occurs a blockage in the pipeline that would cause the pump discharge pressure to approach the no-flow head of the pump it would overcome the limited jacket pressure and open the control valve 22 to recirculate a small flow and prevent the pump from stalling.

0107459

While this invention has been described in conjunction with a preferred embodiment thereof, it is obvious that modification and changes therein may be made by those skilled in the art to which it pertains without departing from the spirit and scope of this invention, as defined by the claims appended hereto.

0107459

## CLAIMS

1. In a liquid-transporting pipeline including a device for selectively blocking or enabling flow therethrough, a surge control system comprising:

a by-pass line to be connected to said pipeline on opposite sides of said device;

a two-way, surge reliever valve in said by-pass line;

a pressure-responsive member to open and close said surge reliever valve;

a control chamber in said surge reliever valve exposed to one side of said pressure-responsive member to bias said member to close said reliever valve;

fluid in said by-pass line on both sides of said surge reliever valve being exposed to the other side of said pressure-responsive member;

an accumulator vessel;

a transfer duct connecting said control chamber to said accumulator vessel; and

liquid communication conduit means to be connected between said pipeline downstream of said device and said accumulator vessel;

said liquid communication conduit means being conditioned for high capacity flow in one direction only from said accumulator vessel to said pipeline so that when said device blocks flow, liquid is drawn from said accumulator to reduce pressure in said control chamber.

2. A surge control system for a liquid-transporting pipeline including a pump, said system comprising:

a by-pass line to be connected to said pipeline on opposite sides of said pump;

a two-way, surge reliever valve in said by-pass line;

a pressure-responsive member to open and close said surge reliever valve;

a control chamber in said surge reliever valve exposed to one side of said pressure-responsive member to bias said member to close said reliever valve;

fluid in said by-pass line on both sides of said surge reliever valve being exposed to the other side of said pressure-responsive member;

an accumulator vessel;

a transfer duct connecting said control chamber to said accumulator vessel; and

liquid communication conduit means to be connected between said pipeline downstream of said pump and the other side of said accumulator vessel;

said conduit means being conditioned for restricted flow from said pipeline to said accumulator vessel so that when said pump is started, liquid is pumped into said accumulator vessel at a rate slower than flow in said by-pass line, enabling flow through said surge reliever valve until pressure in said control chamber nears pressure in said by-pass line.

3. The surge relief system defined by claim 2 wherein:

said conduit means is also conditioned for high capacity flow in one direction only from accumulator vessel to said pipeline so that when said pump is stopped, liquid is drawn from said accumulator vessel to reduce pressure in said control chamber.

4. The surge relief system defined by claim 3 wherein said conduit means comprises:

a large capacity discharge line connected from said accumulator vessel;

a one-way check valve in said discharge line;

a load line; and

a restriction in said load line.

5. The surge relief system defined by claim 4 wherein:

said restriction is a variable metering valve.

6. The surge relief system defined by claim 1 including:

a pressure-transmitting gas-liquid separator in said accumulator forming a gas chamber and a liquid chamber;

said gas chamber being connected to said control chamber and said liquid chamber to be connected to the pipeline.

7. The surge relief system defined by claim 2 including:

a pressure-transmitting gas-liquid separator in said accumulator forming a gas chamber and a liquid chamber;

said gas chamber being connected to said control chamber and said liquid chamber to be connected to the pipeline.

8. The surge relief system defined by claim 3 including:

a pressure-transmitting gas-liquid separator in said accumulator forming a gas chamber and a liquid chamber;

said gas chamber being connected to said control chamber and said liquid chamber to be connected to the pipeline.

9. The surge relief system defined by claim 1 wherein said surge reliever valve comprises:

an expansible tube valve with a flow passageway therethrough;

a circular barrier across said flow passageway;

a flexible tube stretched around said barrier; and

means forming a jacket space control chamber around said tube.

10. The surge relief system defined by claim 2 wherein said surge reliever valve comprises:

an expansible tube valve with a flow passageway therethrough;

a circular barrier across said flow passageway;

a flexible tube stretched around said barrier; and

means forming a jacket space control chamber around said tube.

11. The surge relief system defined by claim 3 wherein said surge reliever valve comprises:

an expansible tube valve with a flow passageway therethrough;

a circular barrier across said flow passageway;

a flexible tube stretched around said barrier; and

means forming a jacket space control chamber around said tube.

12. A surge control system for a liquid-transporting pipeline including a pump, said system comprising:

a by-pass line to be connected to said pipeline on opposite sides of said pump;

a two-way, surge reliever valve in said by-pass line;

a pressure-responsive member to open and close said surge reliever valve;

a control chamber in said surge reliever valve exposed to one side of said pressure-responsive member to bias said member to close said reliever valve;

fluid in said by-pass line on both sides of said surge reliever valve being exposed to the other side of said pressure-responsive member;

an accumulator vessel;

a transfer duct connecting said control chamber to one side of said accumulator vessel;

liquid communication conduit means to be connected between said pipeline from the discharge side of said pump and the other side of said accumulator vessel; and

a relief valve connected to said accumulator vessel to limit the pressure in said control chamber and enable flow through said surge reliever valve when said relief valve is opened.

13. The surge relief system defined by claim 12 including:

a pressure-transmitting gas-liquid separator in said accumulator forming a gas chamber and a liquid chamber;

said gas chamber being connected to said control chamber and said liquid chamber to be connected to the pipeline.

14. The surge relief system defined by claim 12 wherein said surge reliever valve comprises:

an expansible tube valve with a flow passageway therethrough;

a circular barrier across said flow passageway;

a flexible tube stretched around said barrier; and

means forming a jacket space control chamber around said tube.

0107459

European Patent
Office

EUROPEAN SEARCH REPORT

Application number

EP 83 30 6248

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 911 941  (GERBIC)<br>* Abstract; figure * | 1 | F 17 D    1/20<br>F 16 K    7/07<br>F 16 L   55/04 |
| D,A | US-A-3 972 364  (BRUMM) | | |
| D,A | US-A-3 933 172  (ALLEN) | | |
| D,A | US-A-4 261 387  (COHN) | | |
| D,A | US-A-4 282 757  (COHN) | | |
| D,A | US-A-4 340 079  (SMITH) | | TECHNICAL FIELDS SEARCHED (Int. Cl. ³) |
| D,A | US-A-3 272 470  (BRYANT) | | F 17 D<br>F 16 K<br>F 16 L |

The present search report has been drawn up for all claims

| Place of search | Date of completion of the search | Examiner |
|---|---|---|
| THE HAGUE | 30-01-1984 | VAN REETH A.L.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82